# FASCICULE DE BREVET EUROPEEN

(11) **EP 1 550 180 B1**
(45) Date de publication et mention de la délivrance du brevet: **28.03.2012**
(21) Numéro de dépôt: 03780283.2
(22) Date de dépôt: 01.10.2003
(51) Int. Cl.: H01Q 13/02, B29C 43/02

(54) **PROCEDE DE FABRICATION D'UNE ANTENNE HYPERFREQUENCES A GUIDE D'ONDE**
VERFAHREN ZUR HERSTELLUNG EINER HOCHFREQUENTEN WELLENLEITER-ANTENNE
METHOD FOR MAKING A WAVEGUIDE MICROWAVE ANTENNA

(30) Priorité: 07.10.2002 FR 0212411
(43) Date de publication de la demande: 06.07.2005
(73) Titulaire: Thomson Licensing, 92130 Issy-les-Moulineaux (FR)
(72) Inventeur: LOUZIR, Ali, F-35000 RENNES (FR); LO HINE TONG, Dominique, F-35700 RENNES (FR); AVERTY, Florent, F-35000 RENNES (FR); PERSON, Christian, F-29280 LOCMARIA-PLOUZANE (FR); COUPEZ, Jean-Philippe, F-29480 LE RELECQ KERHUON (FR)
(74) Mandataire: Rossmanith, Manfred
(86) Numéro de dépôt international: PCT/FR2003/050071
(87) Numéro de publication internationale: WO 2004/032278

(56) Documents cités:
- WO-A-01/29924
- FR-A- 2 773 646
- US-A- 3 611 396
- US-A- 4 408 208
- PATENT ABSTRACTS OF JAPAN vol. 008, no. 226 (E-272), 17 octobre 1984 (1984-10-17) & JP 59 107607 A (NIPPON DENKI KK), 21 juin 1984 (1984-06-21)
- PATENT ABSTRACTS OF JAPAN vol. 010, no. 095 (E-395), 12 avril 1986 (1986-04-12) & JP 60 236504 A (NIPPON DENKI KK), 25 novembre 1985 (1985-11-25)

## Description

L'invention concerne un procédé de fabrication d'une antenne hyperfréquences à cornet corrugué en technologie guide d'onde.

Ce type d'antenne est généralement réalisé en plusieurs pièces moulées. En particulier, pour réaliser le cornet corrugué, on procède généralement par moulage de deux demi-pièces symétriques par rapport à un plan axial du cornet. Le nombre de moules nécessaires pour la réalisation des différents éléments d'une telle antenne peut devenir prohibitif dans une optique de production en masse et à bas coût. En plus, l'alignement et l'interconnexion des différents éléments de l'antenne pour limiter les discontinuités électriques induisent des contraintes de fabrication et pénalisent le coût de fabrication de l'antenne.

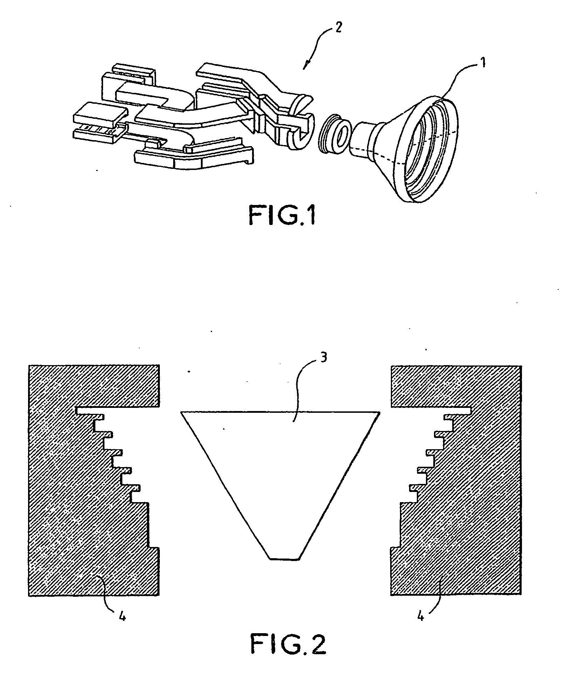

La figure 1 montre en perspective un exemple d'une antenne hyperfréquences en technologie guide d'onde comprenant un cornet corrugué 1 avec entre autres un séparateur de fréquences 2. Le cornet corrugué 1 est formé par assemblage de deux demi-pièces symétriques.

On connaît du document intitulé "Foam technologie for integration of millimetre-wave 3D functions" - ELECTRONICS LETTERS 14 octobre 1999 - Vol.35 N°21, l'utilisation de blocs de mousse en matière synthétique comme le polymethacrylimide, pour réaliser des dispositifs hyperfréquences en technologie guide d'onde. En particulier, ce document suggère la réalisation d'un filtre passe bande 3D par moulage d'un bloc de mousse. D'autre part, le brevet US3,611,396 décrit l'utilisation d'un bloc de mousse rigide pour réaliser une antenne en cornet. On connaît aussi, d'après l'abrégé du brevet japonais JP-A-59107607, un procédé de fabrication d'une antenne en cornet consistant à laminer un plastique renforcé de fibres dans les rainures d'un moule conique de manière à former un cornet corrugué dont les corrugations sont métallisées.

On connaît aussi du document de brevet français FR-A-2780319, un procédé pour déposer un film métallique sur un bloc de mousse pour la fabrication d'antennes hyperfréquences en technologie guide d'onde.

Le but de l'invention est de proposer un procédé de fabrication d'une antenne hyperfréquences à cornet corrugué en technologie guide d'onde, à partir d'un bloc de mousse en matière synthétique, qui est adapté pour une production en volume et à bas coût, tout en évitant les inconvénients indiqués plus haut.

Le procédé selon l'invention consiste à former les corrugations du cornet sur la surface extérieure d'un bloc de mousse en matière synthétique et à métalliser ensuite en surface le bloc de mousse conformé pour réaliser l'antenne. Avec ce procédé, le cornet corrugué peut être fabriqué en une seule pièce ce qui contribue à éliminer les discontinuités électriques dans l'antenne.

La conformation de la surface extérieure du bloc de mousse pour réaliser les corrugations du cornet est de préférence obtenue par thermoformage selon une technique de moulage par pressage à chaud. La préforme du bloc de mousse utilisé pour réaliser le cornet sera de préférence sensiblement conique.

La métallisation en surface du bloc de mousse est préférentiellement réalisée par projection ou au pinceau, ou encore par trempé dans un bain métallique.

Comme mousse en matière synthétique, on utilisera préférentiellement une mousse d'imide de polymethacrylate commercialisée sous le nom de "ROHACELL HF" qui présente entre autres avantages un bon compromis rigidité/faible constante diélectrique/faibles pertes.

On peut en outre conformer par pressage à chaud dans un moule, la surface extérieure de plusieurs tronçons d'un même bloc de mousse pour réaliser en une seule pièce, une antenne hyperfréquences comprenant successivement un cornet corrugué, un adaptateur d'impédance et un polariseur.

Un polariseur d'antenne hyperfréquences en technologie guide d'onde peut être réalisé par insertion de deux plaques métalliques à l'intérieur d'un guide d'onde circulaire, ces deux pièces étant disposées symétriquement l'une par rapport à l'autre dans un plan axial du guide d'onde circulaire. Ces pièces sont formées (longueur, profil), comme cela est connu, de sorte qu'elles permettent de retarder de 90° la phase d'un mode dont le champ électrique E se trouve dans le plan des plaques métalliques, par rapport à un mode dont le champ E est perpendiculaire au plan des plaques, obtenant ainsi en sortie du polariseur une polarisation circulaire à partir d'un champ en entrée ayant une polarisation linéaire dans un plan situé à 45° du plan des plaques et vice versa.

Sur un tronçon cylindrique du bloc de mousse dans lequel est formé le cornet corrugué, on forme par pressage à chaud deux fentes radiales dans le tronçon cylindrique et on métallise ensuite en surface ce tronçon cylindrique pour réaliser le polariseur. Sur un autre tronçon cylindrique du même bloc de mousse, on forme par pressage à chaud une gorge circulaire formant un rétrécissement de section du tronçon cylindrique et on métallise ensuite en surface cet autre tronçon cylindrique pour réaliser l'adaptateur d'impédance.

Un seul moule peut être utilisé pour réaliser en une seule pièce par pressage à chaud le cornet corrugué, l'adaptateur d'impédance et le polariseur ce qui contribue à réduire les coûts de fabrication de l'antenne. Par ailleurs, une antenne hyperfréquences obtenue avec ce procédé bénéficie d'une parfaite continuité électrique entre ces différents composants ce qui contribue à l'obtention de bonnes performances notamment en termes d'adaptation.

Le procédé selon l'invention est décrit ci-après en relation avec les dessins.
La figure 1 montre en perspective une antenne hyperfréquences en technologie guide d'onde comprenant un cornet corrugué.
La figure 2 illustre très schématiquement une opération de moulage par pressage à chaud d'un bloc de mousse selon l'invention pour réaliser en une seule pièce un cornet corrugué en technologie guide d'onde.
La figure 3 montre en coupe axiale le cornet corrugué obtenu avec le procédé selon l'invention.
La figure 4 illustre très schématiquement une opération de moulage par pressage à chaud d'un bloc de mousse selon l'invention pour réaliser un polariseur en technologie guide d'onde.
La figure 5 montre en coupe axiale le polariseur obtenu avec le procédé selon l'invention.
La figure 6 montre en coupe axiale une antenne hyperfréquences réalisée avec le procédé selon l'invention.

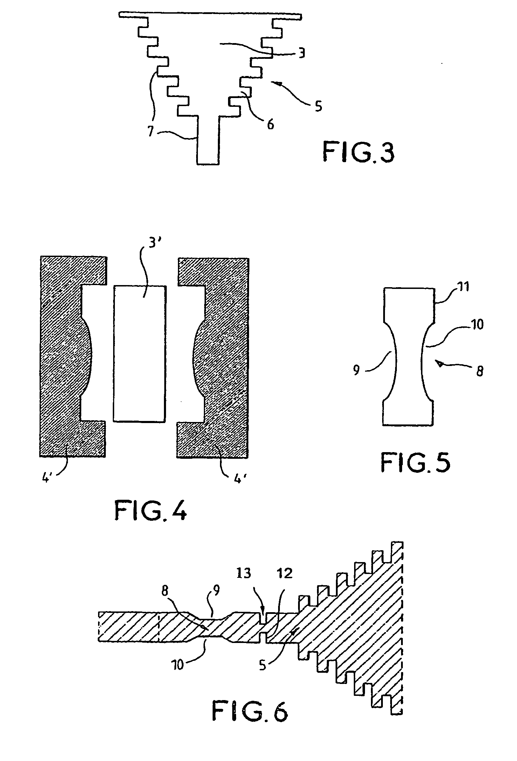

La figure 2 montre une préforme de forme sensiblement conique d'un bloc de mousse 3 en matière synthétique. Cette préforme est conformée dans un moule 4 par pressage à chaud pour réaliser un cornet corrugué 5 montré sur la figure 3. La mousse en matière synthétique est ici une mousse d'imide de polymethacrylate commercialisée sous le nom de "ROHACELL HF". Les corrugations 6 du cornet sont formées sur la surface extérieure du bloc de mousse 3 par thermoformage. Ensuite, on métallise en surface le bloc de mousse conformé 3 pour réaliser le cornet corrugué. Le trait renforcé 7 sur la surface extérieure du bloc de mousse 3 représente le revêtement métallique du bloc de mousse.

La figure 4 montre une préforme de forme sensiblement cylindrique d'un bloc de mousse 3' en matière synthétique. Cette préforme est conformée dans un moule 4' par pressage à chaud pour réaliser un polariseur 8 montré sur la figure 5. La conformation consiste dans la formation dans le bloc de mousse 3' de deux fentes radiales 9,10 symétriques dans un plan axial du bloc de mousse cylindrique. Ensuite le bloc de mousse conformé 3' est métallisé en surface comme montré par le trait renforcé 11.

La figure 6 montre maintenant une antenne hyperfréquences réalisée en technologie guide d'onde selon le procédé de l'invention. L'antenne comprend un cornet corrugué tel que 5 excité par un polariseur en guide d'onde circulaire tel que 8 ainsi qu'un adaptateur d'impédance 13. L'antenne est réalisée en une seule pièce à partir d'un bloc de mousse thermoformé. Plus particulièrement, sur la surface extérieure d'un premier tronçon du bloc de mousse de forme conique, on a formé les corrugations du cornet par thermoformage. Sur la surface extérieure d'un second tronçon du bloc de mousse de forme cylindrique, on a formé une gorge circulaire 12 par thermoformage pour réaliser l'adaptateur d'impédance. Sur la surface extérieure d'un troisième tronçon du bloc de mousse de forme cylindrique, on a formé deux fentes radiales par thermoformage pour former le polariseur. Le thermoformage des trois tronçons du bloc de mousse est réalisé en une seule étape à l'aide d'un seul moule.

Dans le cas de l'utilisation d'une mousse d'imide de polyméthacrylate, on préchauffe la préforme à environ 150°C pour la ramollir et l'insérer dans le moule. Une fois la préforme insérée dans le moule, un profil de température approprié est appliqué, tant pour la phase de montée en température jusqu'à 180°C que de descente en température, avec mise en pression progressive. L'opération de démoulage s'effectue à température ambiante ou légèrement supérieure.

Ensuite, les tronçons du bloc de mousse sont métallisés en surface par projection d'une peinture métallique de type argent ou dérivé ou encore au pinceau, ou encore par trempé dans un bain métallique comme indiqué plus haut. Le revêtement métallique à la surface du bloc de mousse (figuré en hachures) est représenté en trait fort sur la figure 6.

## Revendications

1. Un procédé de fabrication d'une antenne hyperfréquences à cornet corrugué (5) en technologie guide d'onde, **caractérisé en ce qu'**il comprend les étapes suivantes :
- prendre un bloc de mousse (3) en matière synthétique sous forme de cornet,
- former des corrugations (6) sur la surface extérieure dudit bloc de mousse par déformation de ladite surface extérieure,
- métalliser en surface la surface extérieure du bloc de mousse munie des corrugations.

2. Le procédé selon la revendication 1, dans lequel les corrugations du cornet sont formées par pressage à chaud du bloc de mousse dans un moule (4).

3. Le procédé selon la revendication 1 ou 2, dans lequel la métallisation en surface du bloc de mousse est réalisée par projection ou au pinceau, ou encore par trempé.

4. Le procédé selon l'une des revendications 1 à 3, dans lequel on forme deux fentes radiales (8,10) dans un tronçon cylindrique du bloc de mousse par thermoformage et on métallise en surface ce tronçon du bloc de mousse pour réaliser un polariseur en guide d'onde.

5. Le procédé selon l'une des revendications 1 à 4, dans lequel on forme une gorge circulaire (12) dans un autre tronçon du bloc de mousse par thermoformage et on métallise en surface cet autre tronçon du bloc de mousse pour réaliser un adaptateur d'impédance.

6. Antenne hyperfréquences à cornet corrugué en technologie guide d'onde, **caractérisée en ce qu'**elle est constituée d'un bloc de mousse en matière synthétique muni sur sa surface extérieure, de corrugations obtenues par déformation de ladite surface, lesdites corrugations étant métallisées.

7. Antenne selon la revendication 6, **caractérisée en ce qu'**elle comporte de plus un polariseur en guide d'onde constitué par deux fentes radiales (8,10) réalisées dans un premier tronçon cylindrique du bloc de mousse, ce premier tronçon étant métallisé.

8. Antenne selon l'une des revendications 6 et 7, **caractérisée en ce qu'**elle comporte de plus un adaptateur d'impédance constitué par une gorge circulaire réalisée dans un deuxième tronçon du bloc de mousse, ce deuxième tronçon étant métallisé.

## Claims

1. A manufacturing process for a microwave corrugated-horn antenna using waveguide technology, **characterized in that** it comprises the following steps:
- Taking a horn-shaped block of synthetic foam (3),
- forming the corrugations (6) on the external surface of said block of foam by deformation of said external surface,
- metallizing the external surface of the block of foam equipped with the corrugations.

2. The process as claimed in claim 1, wherein the corrugations of the horn are formed by hot pressing of the block of foam in a mold (4).

3. The process as claimed in claim 1 or 2, wherein the metallization of the surface of the block of foam is carried out by projection or using a brush, or alternatively by dipping.

4. The process as claimed in one of claims 1 to 3, wherein two radial slots (8, 10) are formed in a cylindrical section of the block of foam by thermoforming and the surface of this section of the block of foam is metallized in order to form a waveguide polarizer.

5. The process as claimed in one of claims 1 to 4, wherein a circular groove (12) is formed in another section of the block of foam by thermoforming and the surface of this other section of the block of foam is metallized in order to form an impedance adapter.

6. A microwave corrugated-horn antenna using waveguide technology, **characterized in that** it is formed from a block of synthetic foam having, on its external surface, corrugations obtained by deformation of said surface, said corrugations being metallized.

7. The antenna as claimed in claim 6, **characterized in that** it comprises, in addition, a waveguide polarizer formed by two radial slots (8, 10) formed in a first cylindrical section of the block of foam, this first section being metallized.

8. The antenna as claimed in either of claims 6 and 7, **characterized in that** it comprises, in addition, an impedance adapter formed by a circular groove formed in a second section of the block of foam, this second section being metallized.

## Patentansprüche

1. Verfahren zur Herstellung einer hochfrequenten Rillenhornantenne (5) in Wellenleitertechnologie, **dadurch gekennzeichnet, dass** es die folgenden Schritte umfasst:
- einen hornförmigen Schaumstoffblock (3) aus Kunststoff nehmen,
- auf der Außenfläche des Schaumstoffblocks Rillen (6) durch Verformung der Außenfläche bilden,
- die mit den Rillen versehene Außenfläche des Schaumstoffblocks oberflächlich metallisieren.

2. Verfahren nach Anspruch 1, bei dem die Hornrillen durch Warmpressen des Schaumstoffblocks in einer Form (4) gebildet werden.

3. Verfahren nach Anspruch 1 oder 2, bei dem die Oberflächenmetallisierung des Schaumstoffblocks durch Spritzen oder mit dem Pinsel oder auch durch Tauchen erfolgt.

4. Verfahren nach einem der Ansprüche 1 bis 3, bei dem in einem zylindrischen Abschnitt des Schaumstoffblocks zwei radiale Schlitze (8, 10) durch Thermoformung gebildet werden und dieser Abschnitt des Schaumstoffblocks oberflächenmetallisiert wird, um einen Wellenleiterpolarisator zu bilden.

5. Verfahren nach einem der Ansprüche 1 bis 4, bei dem in einem anderen Abschnitt des Schaumstoffblocks eine kreisförmige Kehle (12) durch Thermoformung gebildet wird und dieser andere Abschnitt des Schaumstoffblocks oberflächenmetallisiert wird, um einen Impedanzadapter zu bilden.

6. Hochfrequente Rillenhornantenne in Wellenleitertechnologie, **dadurch gekennzeichnet, dass** sie aus einem Schaumstoffblock aus Kunststoff besteht, dessen Außenfläche mit Rillen versehen ist, die durch Verformung dieser Fläche ausgebildet werden, wobei diese Rillen metallisiert sind.

7. Antenne nach Anspruch 6, **dadurch gekennzeichnet, dass** sie ferner einen Wellenleiterpolarisator aufweist, der durch zwei radiale Schlitze (8, 10) gebildet ist, die in einem ersten zylindrischen Abschnitt des Schaumstoffblocks ausgebildet sind, wobei dieser erste Abschnitt metallisiert ist.

8. Antenne nach einem der Ansprüche 6 und 7, **dadurch gekennzeichnet, dass** sie ferner einen Impedanzadapter aufweist, der durch eine ringförmige Kehle gebildet ist, welche in einem zweiten Abschnitt des Schaumstoffblocks ausgebildet ist, wobei dieser zweite Abschnitt metallisiert ist.
